# EUROPÄISCHE PATENTSCHRIFT

(11) **EP 0 859 298 B1**
(45) Veröffentlichungstag und Bekanntmachung des Hinweises auf die Patenterteilung: **25.04.2007**
(21) Anmeldenummer: 98100773.5
(22) Anmeldetag: 17.01.1998
(51) Int. Cl.: G05B 19/409, E05F 15/20

(54) **Torantrieb**
Door drive
Commande de porte

(30) Priorität: 14.02.1997 DE 19705543
(43) Veröffentlichungstag der Anmeldung: 19.08.1998
(73) Patentinhaber: Prettl, Rolf, 72072 Tübingen (DE)
(72) Erfinder: Kentenich, Walter, 53844 Troisdorf/Sieglar (DE)
(74) Vertreter: Steil, Christian

(56) Entgegenhaltungen:
- EP-A- 0 624 541
- EP-A- 0 667 440
- DE-A- 4 231 803
- DE-A- 4 337 828
- DE-A- 19 534 086
- DE-U- 29 700 449

## Beschreibung

Die vorliegende Erfindung betrifft einen Torantrieb, insbesondere für Garagentore, mit
- einem Motor,
- einer Kopplungseinrichtung, die Antriebsenergie des Motors in Bewegungen des Tors umsetzt, und
- einer Steuereinheit, die den Motor in Abhängigkeit von an die Steuereinheit angeschlossenen Baugruppen steuert und ein Gehäuse aufweist, wobei die Funktion der Baugruppen über Parameter an der Steuereinheit individuell einstellbar ist, wobei die Steuereinheit zur Einstellung der Parameter der Baugruppen eine Bedieneinheit mit einem Display und Einstellmitteln, eine Speichereinrichtung zur Speicherung von Parametern sowie eine Prozessoreinrichtung aufweist, und
wobei die Prozessoreinrichtung die Speichereinrichtung und die Bedieneinheit derart ansteuert, daß die Parameter wenigstens einiger der Baugruppen im Rahmen von Menüs auf dem Display angezeigt werden und mittels der Einstellmittel einstellbar sind.

Ein solcher Torantrieb ist aus der DE 43 37 828 A1 bekannt.

Bei dem aus dieser Druckschrift bekannten Torantrieb ist eine Grundeinheit vorhanden, die für einen jeweiligen Anwendungsfall aktiviert wird. Die Aktivierung erfolgt über ein separates Dateneingabegerät. Das Dateneingabegerät stellt eine menügeführte Bedienung bereit. Die Grundeinheit und das Dateneingabegerät sind über eine serielle Schnittstelle miteinander verbindbar. An ein Eingangsfilter der Grundeinheit können ein Bewegungsmelder und ein Schlüsselschalter angeschlossen werden.

Aus der Druckschrift EP 0 667 440 A1 ist eine Vorrichtung zur Rolladensteuerung bekannt. Die Rolladensteuerung weist ein Schaltelement zum Auslösen einer Bewegung auf, einen Geber zur zeitgesteuerten Betätigung eines Antriebsmotors und eine Einrichtung zur Programmierung der Steuerzeiten. Um auf ein Display für die Uhrzeit verzichten zu können, ist vorgesehen, daß das Einspeichern der Steuerzeiten zu den gewünschten Öffnungs- bzw. Schließzeiten erfolgt, und zwar durch Tastenbetätigung.

Ein aus dem Dokument DE 42 14 998 C2 bekannter Torantrieb weist eine Steuereinheit mit einer Kraftbedarfsüberwachung des Antriebsmotors auf. Die Kraftbedarfsüberwachung ist mit einer Sicherheitsabschaltung gekoppelt. In einem Speicher der Steuereinheit werden die torlaufspezifischen Kraftbedarfswerte des Antriebsmotors abgelegt. Ein Vergleicher vergleicht die während eines Torlaufes von der Kraftbedarfsüberwachung erfaßten aktuellen Kraftbedarfswerte des Antriebsmotors mit den entsprechenden Werten aus dem Speicher. Bei Überschreiten eines für eine jeweilige Torlaufposition spezifischen vorgegebenen Kraftbedarfshöchstwertes unterbricht eine Sicherheitsabschaltung den Torantrieb. Die von dem Vergleicher ermittelten Vergleichswerte werden einer Diagnoseeinheit zugespeist, die eine Vergleichswertüberwachungsschaltung aufweist, die die jeweils im Betrieb überwacht. Die Diagnoseeinheit ist mit einem Display versehen, das ein Überschreiten eines bestimmten Toleranzwertes einer schleichenden Abweichung anzeigt.

Ferner ist aus dem Gebrauchsmuster DE 87 01 165 U1 ein elektrischer Torantrieb bekannt, der mit einer Steuereinheit mit Speicherelementen versehen ist, in denen Torendstellungen speicherbar sind. Der Torantrieb ist ferner mit Sensoren zur Ermittlung der Ist-Stellung des Tores versehen. An den Ausgang der Sensoren und an die Speicherelemente ist ein Vergleicher angeschlossen. Der Vergleicher ist mit Mitteln zum Abschalten des Antriebs verbunden.

Torantriebe im Sinne der vorligenden Erfindung dienen zum Öffnen und Schließen von Toren wie Schwing-, Rundum-, Schiebe-, Roll- und Kipptoren. Unter Toren im Sinne der vorliegenden Erfindung sollen auch Türen verstanden werden, die entsprechend zu den genannten Toren bewegt werden oder laufen. Neben den gewöhnlichen Öffnungs- und Schließparametern müssen Torantriebe Sicherheitsparameter aufweisen. Mit anderen Worten muß gewährleistet sein, daß der Torantrieb beim Auflaufen des Tores auf Hindernisse selbsttätig abschaltet. Zum Erkennen einer solchen Situation kann bspw., wie in der eingangs genannten DE 42 14 998 C2 offenbart, der Motorstrom auf unzulässige Spitzenwerte hin überwacht werden.

Ein weiterer wichtiger Aspekt von Torantrieben ist der bereitgestellte Komfort. Als Beispiel hierfür sei die Möglichkeit genannt, den Torantrieb funkferngesteuert oder IR-gesteuert auszulösen. Dieser Komfortaspekt ist in dem Gebrauchsmuster DE 87 01 165 U1 angedeutet.

Die Anforderungen der Verbraucher an die Sicherheit und an den Komfort von Torantrieben steigen kontinuierlich an. So kann es bspw. gewünscht sein, mehrere Sicherheitseinrichtungen miteinander zu kombinieren, bspw. einen Not-Aus-Schalter mit einer Lichtschranke. Es kann auch gewünscht sein, im Falle einer Notabschaltung aufgrund des Auflaufens auf ein Hindernis die Torbewegung umzukehren. Hinsichtlich des Komforts gibt es Kundenwünsche nach einer integrierten Beleuchtung, um bspw. eine geöffnete Garage auszuleuchten. Auch ist es denkbar, Bewegungsmelder in den Torantrieb zu integrieren, um eine automatische Schließbewegung des Tores davon abhängig zu machen, ob sich in der Garage noch Personen bewegen.

Hinzu kommt, daß viele dieser zusätzlichen Merkmale von Torantrieben in gewissen Grenzen einstellbar sein sollten. Als Beispiel hierfür sei ein automatischer Schließvorgang nach dem Ablauf einer bestimmten Zeit nach einem Öffnungsvorgang genannt. So sollte diese Zeitspanne für den Fall länger sein, daß das angetriebene Tor in der Regel von älteren Personen genutzt wird. Bei einer überwiegenden Benutzung durch jüngere Personen sollte es möglich sein, diese Zeitspanne, im folgenden auch Offenhaltezeitspanne genannt, zu verkürzen, um zu vermeiden, daß die Garage eine längere Zeit unbeaufsichtigt offen steht.

Das Anschließen der zusätzlichen Komfort- und Sicherheitsmerkmale (im vorliegenden Baugruppen genannt) an den Torantrieb sowie das Einstellen bestimmter Parameter dieser Baugruppen werden von Fachleuten ausgeführt. Denn hierzu ist es in der Regel notwendig, ein Gehäuse des Torantriebes abzunehmen, bestimmte Veränderungen an der Beschaltung vorzunehmen (bspw. Jumper einsetzen oder umsetzen bzw. Dip-Schalter umlegen).

Während einige der Parameter generell nur von autorisierten Personen vorgenommen werden sollten, insbesondere die Parameter der Sicherheits-Baugruppen, wäre es wünschenswert, wenn einige weniger sicherheitsrelevante Parameter auch von Nichtfachleuten geändert werden könnten. Als Beispiel hierfür sei wiederum die Zeitspanne zwischen einem Öffnungsvorgang und einem automatisch folgenden Schließvorgang genannt. Wenn nämlich der Eigentümer einer mit einem solchen Torantrieb ausgestatteten Garage wechselt, so sollte es möglich sein, daß der Eigentümer selber diese Zeitspanne neu festlegt. Dies ist jedoch bislang nicht möglich, da hierzu das Gehäuse des Torantriebes geöffnet werden muß, was in aller Regel einen Verlust der Garantieansprüche mit sich bringt.

Vor diesem Hintergrund besteht das der Erfindung zugrundeliegende Problem darin, einen universellen Torantrieb anzugeben, dessen Parameter sich leicht und sicher einstellen lassen.

Dieses Problem wird bei dem eingangs genannten Torantrieb dadurch gelöst, daß die Bedieneinheit sowie Klemmen zum Anschluß der Baugruppen an dem Gehäuse der Steuereinheit von außen zugänglich sind, dass die Menüs nach übergeordneten Funktionsgruppen zusammengestellt sind, und dass bestimmte Parameter und/oder Menüs nur nach Eingabe eines Codes einstellbar bzw. anwählbar sind.

Zum einen wird erreicht, daß sich die Einstellung der Parameter des Torantriebes auf einfache Weise realisieren läßt. Durch die menügestützte Bedienerführung können die Parameter der Baugruppen auf einfache Weise auch ohne Kenntnis des "Innenlebens" des Torantriebs eingestellt werden.

Hierdurch kann die Steuereinheit des Torantriebs ab Werk durch das Gehäuse gekapselt geliefert werden. Dabei ist es natürlich möglich, daß das Gehäuse für die Steuereinheit gleich dem Gehäuse für den gesamten Torantrieb ist (die Kopplungseinrichtung ausgenommen). Das Anschließen der Baugruppen erfolgt einfach über die entsprechenden Klemmen an dem Gehäuse. Das Einrichten des Torantriebs, also insbesondere das Einstellen der Parameter der Baugruppen erfolgt ebenfalls von außen über die Bedieneinheit mittels der menügestützten Bedienerführung.
Ferner wird erreicht, daß bestimmte, ihrer Funktion nach zugehörige Parameter im Rahmen von einem Menü einstellbar sind, so daß unnötige Menüwechsel vermieden werden.

Ein Code zur Einstellung bzw. Anwahl bestimmter Parameter/Menüs ist üblicherweise nur autorisiertem Fachpersonal bekannt und wird insbesondere dazu benötigt, auf die sicherheitsrelevanten Parameter des Torantriebs zuzugreifen.

Die Aufgabe wird somit vollkommen gelöst.

Gemäß einer bevorzugten Ausführungsform werden die Parameter sämtlicher Baugruppen im Rahmen von Menüs auf dem Display angezeigt und sind mittels der Einstellmittel einstellbar.

Hierdurch wird die Einstellbarkeit weiter erleichtert, da sämtliche Parameter zentral an dem Display mittels der menügestützten Bedienerführung einstellbar sind.

Vorzugsweise ist das Display einzeilig.

Es hat sich gezeigt, daß ein solches Display aus zweierlei Gründen Vorteile bietet. Zum einen wird bei einem einzeiligen Display in der Regel genau ein Parameter angezeigt, so daß die Einstellung auch für Nichtfachleute übersichtlich bleibt. Zum anderen sind einzeilige Displays besonders kostengünstig zu fertigen und in den Torantrieb zu integrieren.

Eine weitere bevorzugte Ausführungsform sieht vor, daß die Einstellmittel ein Verstellglied zur Anwahl unterschiedlicher Menüs, Anwahlmittel zur Anwahl einer einen bestimmten Parameter betreffenden Menüzeile sowie Auswahlmittel zur Auswahl eines bestimmten Parameters aufweisen.

Durch diese Maßnahme wird erreicht, daß bestimmte Menüzeilen systematisch aufgefunden werden können und die entsprechenden Parameter auf einfache Weise einstellbar sind.

Es ist weiterhin bevorzugt, wenn die Speichereinrichtung ein nicht flüchtiger Speicher, vorzugsweise ein EEPROM ist.

Bei einer derartigen Speichereinrichtung bleiben die Parametereinstellungen auch bei einem Netzausfall erhalten.

Dabei ist es bevorzugt, wenn folgende Menüs anwählbar sind: ein Betriebsmenü, mittels dessen Betriebsparameter einstellbar sind, und ein Sensormenü, mittels dessen Sensorparameter einstellbar sind.

Unter Betriebsparametern werden nicht sicherheitsrelevante Parameter des Betriebs des Torantriebs verstanden. Die Betriebsparameter umfassen bspw. die Parameter "Offenhaltezeit", die Betriebsgeschwindigkeit, also die Geschwindigkeit der Torbewegung, sowie die Zeit, für die eine angeschlossene Beleuchtung nach einem Öffnungsvorgang angeschaltet bleibt. Die Sensorparameter sind demgegenüber in der Regel sicherheitsrelevante Parameter, bspw. der Schwellenwert des Motorstroms, ab dem eine Sicherheitsabschaltung erfolgt. Durch die Trennung von Betriebsparametern und Sensorparametern in zwei unterschiedlichen Menüs wird es möglich, das eine, sicherheitsrelevante Menü gegenüber Änderungen von Nichtfachleuten zu sperren, wohingegen die Betriebsparameter, die im wesentlichen Komfortaspekte umfassen, auch von Nichtfachleuten mittels des entsprechenden Menüs einstellbar sein können.

Dabei ist es weiter bevorzugt, wenn weitere folgende Menüs anwählbar sind: ein Servicemenü, mittels dessen Serviceparameter einstellbar sind, ein Referenzfahrtmenü, mittels dessen Parameter für eine Referenzfahrt zur Individualeinrichtung einstellbar sind, und ein Uhrenmenü, mittels dessen die Parameter einer internen Uhr der Steuereinheit einstellbar sind.

Auch die Serviceparameter sind sicherheitsrelevant. Sie umfassen bspw. als Parameter ein Wartungsintervall sowie eine Kennung, ob bestimmte Wartungen ausgeführt worden sind. In dem Referenzfahrtmenü können Parameter festgelegt werden, die bspw. im Rahmen eines sogenannten "Teach-in" festgelegt werden, wie die Positionen, die von dem Torantrieb als Endlage für das geschlossene bzw. das offene Tor zugrundegelegt werden sollen. Auch das Servicemenü und das Referenzfahrtmenü betreffen sicherheitsrelevante Aspekte. Demgegenüber betrifft das Uhrenmenü im wesentlichen Komfortaspekte. Im Rahmen des Uhrenmenüs können bspw. die Uhrzeit, das Datum eingestellt sowie das Tor für bestimmte Tage oder mehrere zusammenhängende Tage (Urlaub) gesperrt werden.

Ferner ist es besonders bevorzugt, wenn zur Eingabe des Codes ein separates Menü anwählbar ist.

Durch diese Maßnahme wird die Prozedur des Eingebens des Codes von den anderen Menüs getrennt. Hierdurch wird also vermieden, daß bspw. nicht autorisierte Personen im Rahmen des Zugriffs auf ein für diese zugewiesenes Menü unabsichtlich den richtigen Code eingeben und damit die Sicherheitsparameter des Torantriebes freigeben.

Eine bevorzugte Weiterbildung der Erfindung sieht vor, daß die Baugruppen in obligate Baugruppen und in optionale Baugruppen unterteilt sind, daß in der Steuereinheit Schnittstellenmodule für die optionalen Baugruppen vorgesehen sind und daß die Parameter der optionalen Baugruppen erst nach Eingabe eines Codes einstellbar sind.

Gewisse Baugruppen werden nur relativ selten benötigt bzw. vom Kunden gewünscht. Als Beispiel sei die Möglichkeit genannt, einen Bewegungsmelder an den Torantrieb zu koppeln. Die Kosten für das entsprechende Schnittstellenmodul auf der Steuereinheit sind jedoch vernachlässigbar gering. Daher wird vorzugsweise für den Torantrieb nur ein einziger Steuereinheitstyp hergestellt, der alle Schnittstellenmodule umfaßt. Um zu verhindern, daß Personen, die den Torantrieb ohne eine optionale Baugruppe (bspw. Bewegungsmelder) gekauft haben, dennoch einen Bewegungsmelder an den Torantrieb anschließen, was aufgrund des entsprechenden vorhandenen Schnittstellenmoduls möglich wäre, werden diese Schnittstellenmodule solange gesperrt, bis ein entsprechender Code eingestellt ist. Durch diese Maßnahme kann also mit anderen Worten der Torantrieb einerseits besonders kostengünstig hergestellt werden. Zum anderen wird vermieden, daß Personen unzulässigerweise von der Möglichkeit der Aufrüstung mit optionalen Baugruppen Gebrauch machen.

Gemäß einer alternativen bevorzugten Ausführungform sind die Baugruppen in obligate Baugruppen und in optionale Baugruppen unterteilt, wobei in der Steuereinheit Steckplätze vorgesehen sind, in die Schnittstellenmodule für die optionalen Baugruppen einsteckbar sind.

Auch durch diese Maßnahme wird erreicht, daß nur ein Typ von Steuereinheit, also in der Regel nur ein Typ von Steuereinheitsplatine für sämtliche Torantriebe herzustellen ist. Die Aufrüstung mit Schnittstellenmodulen für optionale Baugruppen erfolgt bei entsprechender Auslegung der Steuereinheit bzw. der Steuereinheitsplatine einfach durch Einstecken dieser Schnittstellenmodule in die Steuereinheit bzw. in die Steuereinheitsplatine.

Vorzugsweise sind auf dem Display Felder für Statusanzeigen und/oder Fehleranzeigen vorgesehen.

Durch diese Maßnahme lassen sich noch weitere, bei einem Torantrieb in der Regel notwendige Parameter in die Bedieneinheit integrieren. Dem Benutzer, sei es ein Fachmann oder ein Nichtfachmann, wird nur eine einzige "Schnittstelle" zu dem Torantrieb geboten. Hierdurch wird nicht nur die Bedienung des Torantriebs erleichtert, es wird auch vermieden, daß bestimmte Fehler- oder Statusanzeigen übersehen werden.

Schließlich ist es besonders bevorzugt, wenn das Display durch Betätigung der Einstellmittel aktivierbar ist.

Durch diese Maßnahme wird erreicht, daß die Anzahl der Einstell- bzw. Betätigungsmittel wie Taste, Schalter etc. minimal ist. Somit ist die Bedienung insbesondere für Nichtfachleute weiter erleichtert. Es versteht sich dabei, daß das Display unabhängig von der Betätigung der Einstellmittel auch durch Status- oder Fehlermeldungen aktivierbar sein kann, um die hierfür auf dem Display vorgesehenen Felder anzusprechen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Darin zeigen:
- Fig. 1: eine schematische Darstellung einer bevorzugten Ausführungsform des erfindungsgemäßen Torantriebs; und
- Fig. 2: eine schematische Darstellung von unterschiedlichen, an der Bedieneinheit des Torantriebs abrufbaren Menüs.

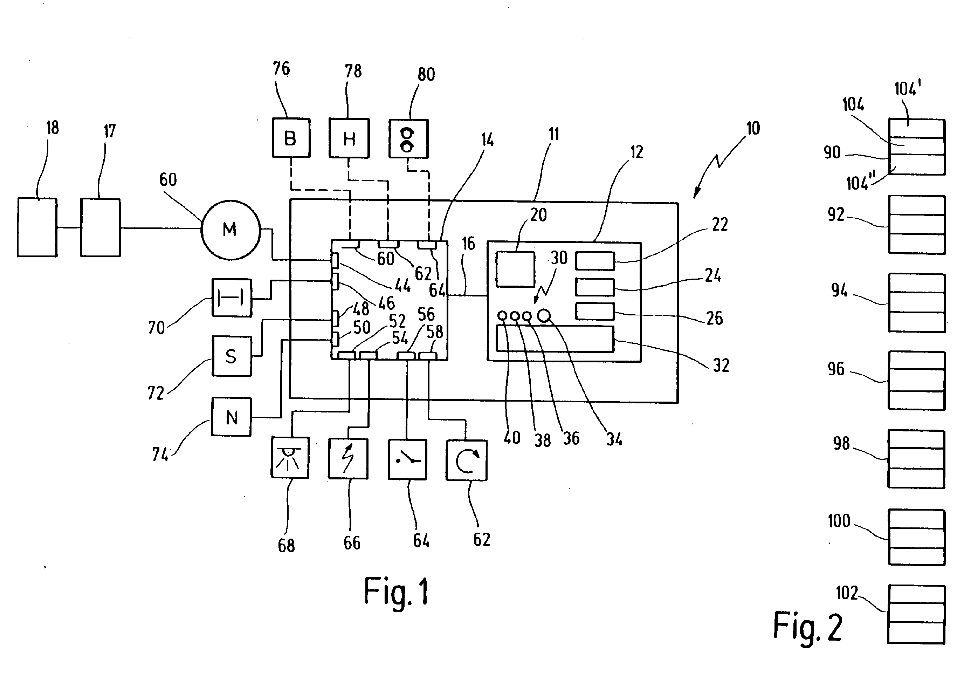

In Fig. 1 ist eine bevorzugte Ausführungsform eines Torantriebs generell mit der Bezugsziffer 10 bezeichnet.

Der Torantrieb 10 weist eine Steuereinheit 11 auf, die mit einer Prozessorplatine 12 und einer Schnittstellenplatine 14 bestückt ist. Die Prozessorplatine 12 und die Schnittstellenplatine 14 stehen über eine Schnittstelle 16 miteinander in Verbindung. Es versteht sich, daß die auf der Prozessorplatine 12 angeordneten Bauelemente untereinander so verbunden sind, daß sie nach der Art eines Microcontrollers arbeiten können. Es versteht sich weiterhin, daß sich auf dieser Prozessorplatine 12 eine programmierbare Echtzeituhr befinden kann. Aus Übersichtlichkeitsgründen sind ferner sämtliche Stromversorgungsleitungen in Fig. 1 nicht dargestellt. Es versteht sich jedoch, daß der Torantrieb 10 bspw. aus einer gewöhnlichen Netzsteckdose mit Energie versorgt werden kann.

Der Torantrieb 10 ist über eine Kopplungseinrichtung 17 mit einem Tor 18 auf herkömmliche Weise verbunden.

Die Prozessorplatine 21 umfaßt einen Mikroprozessor 20, einen ROM-Speicher 22, einen RAM-Speicher 24, einen EEPROM-Speicher 26 sowie eine generell mit der Bezugsziffer 30 bezeichnete Bedieneinheit.

Die Bedieneinheit 30 umfaßt ein einzeiliges Display 32, ein Verstellglied 34 zur Anwahl von Menüs, einen Anwahltaster 36 zum Anwählen von bestimmten Menüzeilen sowie zwei Auswahltasten 38, 40 zum Einstellen, also Verändern von Parameterwerten. Dabei hat die Auswahltaste 38 die Funktion, den Parameterwert zu höheren Werten hin zu verändern. Der Auswahlschalter 40 dient zur Veränderung zu kleineren Werten hin.

Die Schnittstellenplatine 14 umfaßt eine Mehrzahl von Schnittstellenmodulen 44 bis 58, die einem Motor 60 des Torantriebs 10 sowie einer Mehrzahl von an den Torantrieb 10 anschließbaren Baugruppen 62 bis 80 zugeordnet sind.

Die Baugruppe 62 ist ein Drehstellungs- bzw. Winkelgeber, der bspw. mit der Abtriebswelle des Motors 70 gekoppelt ist und Winkelinkremente an die Schnittstellenplatine 14 leitet, aus denen sich die absolute Torposition errechnen läßt. Der Drehstellungs- bzw. Winkelgeber 62 kann bspw. durch einen Hall-Sensor gebildet sein.

Die Baugruppe 64 ist durch einen sogenannten Starttaster gebildet. Mittels des Starttasters kann der Torantrieb 10 angesteuert werden, um das Tor 18 zu öffnen oder zu schließen, je nach dem augenblicklichen Zustand.

Die Baugruppe 76 ist ein Funkempfänger, der im Grunde dieselbe Funktion hat wie der Starttaster 64, das den Torantrieb 10 ansteuernde Signal jedoch nicht auf einen Tastendruck sondern auf den Empfang eines Funksignals von einem Handsender auslöst.

Die Baugruppe 68 bezeichnet eine Beleuchtungseinrichtung. Die Beleuchtungseinrichtung 68 kann bspw. in das Gehäuse integriert sein. Alternativ ist es auch möglich, an dem Gehäuse des Torantriebs 10 eine herkömmliche Netzsteckdose und/oder eine 12 Volt-Spannung bereitzustellen, um hieran geeignete Beleuchtungsmittel anschließen zu können.

Die Baugruppe 70 ist durch eine Lichtschranke gebildet. Die Lichtschranke 70 kann bspw. im Torbereich angeordnet sein, um im Falle, daß eine Person durch die Lichtschranke hindurchtritt, eine Sicherheitsabschaltung auszulösen.

Die Baugruppe 72 ist eine Sicherheitsleiste, die bspw. an einer Vorderkante des Tors 18 angeordnet sein kann und über eine Druck- oder Kraftsensorik verfügt, so daß beim Auflaufen des Tors auf ein Hindernis die Sicherheitsabschaltung ausgelöst werden kann.

Die Baugruppe 74 ist durch einen Not-Stop-Schalter gebildet, der bspw. in Griffhöhe an einer Garagenwand angebracht sein kann. Im Falle des Erkennens eines sicherheitsproblematischen Zustandes kann der Not-Stop-Schalter 74 ausgelöst werden, um Bewegungen des Tors 18 mittels der Sicherheitsabschaltung zu unterbrechen.

Aus dem Obengesagten ergibt sich, daß die Lichtschranke 70, die Sicherheitsleiste 72 und der Not-Stop-Schalter 74 gleichwertig zum Auslösen der Sicherheitsabschaltung herangezogen werden können. Es versteht sich, daß bereits die Betätigung von einer dieser Baugruppen zu einer Sicherheitsabschaltung führt.

Die Baugruppen 62 bis 70 werden im vorliegenden Fall als obligate Baugruppen bezeichnet. Der Begriff obligat soll in diesem Zusammenhang nicht so verstanden werden, daß diese Baugruppen bei jedem Torantrieb in dieser bestimmten Konstellation vorhanden sein müssen. Vielmehr soll unter dem Begriff obligat vorliegend verstanden werden, daß die als solche gekennzeichneten Baugruppen bei einer bestimmten Klasse von Torantrieben 10 immer vorhanden sind. Mit anderen Worten ist es auch denkbar, lediglich die Baugruppen 62, 66 und 74 als obligat zu bezeichnen.

Im Gegensatz zu den obligaten Baugruppen 62 bis 70 sind Baugruppen 76 bis 80 optionale Baugruppen. Das heißt, daß die optionalen Baugruppen bei einer bestimmten Klasse von Torantrieben 10 vorhanden sein können, in der Grundausstattung des Torantriebs 10 jedoch nicht enthalten sind.

Dabei ist die Baugruppe 76 durch einen Bewegungsmelder gebildet, der bspw. in einer Garage angeordnet werden kann und zur Steuerung eines automatischen Schließvorganges herangezogen wird. Dabei wird ein automatischer Schließvorgang solange nicht ausgelöst, bis der Bewegungsmelder 76 signalisiert, daß sich in der Garage nichts mehr bewegt.

Die Baugruppe 78 ist eine Baugruppe zum Anschluß an eine Hausleittechnikanlage. Mittels dieser Baugruppe 78 ist es bspw. möglich, ein Einfahrtstor zu einem Grundstück ferngesteuert nach der Art eines Türöffners zu öffnen.

Die Baugruppe 80 betrifft schließlich eine Ampelschaltung. Eine solche Ampelschaltung 80 findet bspw. in Tiefgaragen von Wohnblöcken Verwendung, bei denen die Einfahrt in die Tiefgarage und die Ausfahrt aus der Tiefgarage über eine gemeinsame Rampe erfolgen. Falls das entsprechende Tor 18 von außerhalb der Tiefgarage geöffnet wird, kann die Ampelschaltung 80 dazu herangezogen werden, eine im Inneren der Tiefgarage angeordnete Ampel auf Rot zu schalten. Hierdurch wird Personen im Inneren der Garage signalisiert, daß eine Ausfahrt derzeit nicht möglich ist, da jemand beabsichtigt, in die Garage hinein zu fahren.

Wie es nachfolgend erläutert wird, ist der Mikroprozessor 20 so programmiert, daß sich die Parameter sämtlicher Baugruppen 62 bis 80 und weitere Parameter des Torantriebs 10 menügestützt mittels der Bedieneinheit 30 einstellen lassen.

Der Mikroprozessor 20 ist zur Einstellung der verschiedenen Parameter so programmiert, daß die Parameter sämtlicher Baugruppen 62 bis 80 im Rahmen von Menüs auf dem einzeiligen Display mittels des Verstellgliedes 34 und des Anwahltasters 36 angezeigt und mittels der Auswahltaste 38, 40 eingestellt werden können.

Hierzu werden von dem Mikroprozessor 20 im vorliegenden Fall sieben verschiedene Menüs 90 bis 102 (siehe Fig. 2) angeboten, die mittels des Verstellgliedes 34 angewählt werden können. Jedes Menü 90 bis 102 ist durch eine Mehrzahl von Menüzeilen 104, 104', 104'' gebildet, von denen jeweils nur eine Zeile 104 auf dem Display 32 angezeigt wird. Mittels des Anwahlschalters 34 können die anderen Zeilen 104', 104'' sequentiell angewählt werden. In einer Menüzeile 104, 104', 104'' wird jeweils ein bestimmter Parameter mit einem bestimmten Wertebereich angezeigt. Der Wertebereich kann bspw. eine Zeitspanne von 0 bis 60 Minuten oder durch Ja/Nein gebildet sein. Die Einstellung des Parameters erfolgt über die Auswahltaste 38, 40, wobei der Wertebereich des Parameters mittels des Auswahltasters 38 zu höheren Werten hin verändert wird. Der Auswahltaster 40 dient zur Veränderung des Parameters hin zu niedrigeren Werten.

Durch diese hierarchische Struktur, mittels derer aus einer Mehrzahl von Menüs mittels des Verstellgliedes 34 ein bestimmtes Menü ausgewählt werden kann, innerhalb des ausgewählten Menüs mittels des Anwahltasters 36 eine bestimmte Menüzeile 104, 104', 104'' angewählt und mittels der Auswahltaste 38, 40 verändert werden kann, läßt sich auf einfache Weise gezielt auf bestimmte Parameter zugreifen.

Die Menüs 90 bis 102 sind jeweils nach übergeordneten Funktionsgruppen zusammengestellt. Mit anderen Worten ist jedem Menü eine bestimmte Gruppe von logisch zusammengehörenden Parametern zugeordnet.

Das Menü 90 ist ein Betriebsmenü, mittels dessen Betriebsparameter einstellbar sind.

Diese Betriebsparameter umfassen
- einen Dauerlicht-Parameter, mittels dessen die Beleuchtungs-Baugruppe 68 angeschaltet werden kann, solange ein "J" am Display 32 ausgewählt ist,
- einen Leuchtdauer-Parameter, mittels dessen die Anschaltdauer der Beleuchtungs-Baugruppe 68 nach einer Torbewegung eingestellt werden kann (z.B. von 10 Sekunden bis 260 Sekunden),
- einen Betriebsgeschwindigkeits-Parameter, mittels dessen die maximale Torgeschwindigkeit eingestellt werden kann,
- einen Anlauf-Parameter, mittels dessen der Weg für einen sanften Anlauf beim Start der Torbewegung verändert werden kann,
- einen Anhalte-Parameter, mittels dessen der Weg bzw. die Weglänge für einen sanften Anhaltevorgang vor Ende der Torbewegung verändert werden kann,
- einen Autozulauf-Parameter, mittels dessen eingestellt werden kann, ob sich das Tor 18 automatisch nach einer definierten Offenhaltezeit schließen soll, und
- einen Offenhaltezeit-Parameter, mittels dessen die Offenhaltezeit eingestellt werden kann.

Das Menü 92 ist ein Referenzfahrtmenü, mittels dessen Parameter für Referenzfahrten zur Einrichtung des Torantriebs 10 nach der Erstinstallation oder nach baulichen Veränderungen eingestellt werden können. Die hier angesprochenen Parameter umfassen bspw. einen Parameter für eine "Lernfahrt" für den Weg. Bei Auswahl von "J" startet eine Lernfahrt für den Torweg. Desgleichen kann ein Parameter für eine Lernfahrt für die Kraft vorhanden sein.

Das Menü 94 ist ein Sensormenü, mittels dessen die folgenden Parameter einstellbar sind:
- ein Sicherheitsleisten-Parameter, mittels dessen auswählbar ist, ob überhaupt eine Sicherheitsleiste 72 vorhanden ist, und wenn ja, welcher Typ von Sicherheitsleiste,
- ein Lichtschranken-Parameter, mittels dessen eingestellt werden kann, ob eine Lichtschranke 70 angeschlossen ist,
- einen Not-Stop-Parameter, mittels dessen eingestellt werden kann, ob ein Not-Stop-Taster 74 angeschlossen ist,
- einen Krafttoleranz-Parameter, mittels dessen ein Schwellenwert für den Motorstrom eingestellt werden kann, ab dem eine Sicherheitsabschaltung erfolgt, und
- einen Reversier-Parameter, mittels dessen eingestellt werden kann, ob das Tor 18 nach einer Sicherheitsabschaltung reversieren soll.

Das Menü 96 ist ein Servicemenü, mittels dessen die folgenden Parameter einstellbar sind:
- ein Betriebsstunden-Parameter, der die Betriebsstunden anzeigt und nicht veränderbar ist,
- ein Wartungs-Parameter, mittels dessen angegeben werden kann, nach wieviel Betriebsstunden eine Statusanzeige ausgelöst werden soll, daß eine Wartung erforderlich ist,
- einen Zyklus-Parameter, der die Anzahl von Bewegungszyklen des Tors 18 anzeigt und in der Regel nicht veränderbar ist,
- einen zweiten Wartungs-Parameter, mittels dessen angegeben werden kann, nach wieviel Bewegungszyklen eine Statusanzeige ausgelöst werden soll, daß eine Wartung erforderlich ist,
- einen Überlastzahl-Parameter, der die Anzahl von Überlastabschaltungen (Strom oberhalb Schwellenwert) anzeigt,
- einen Rücksetz-Parameter, mittels dessen die Wartungs-Parameter nach erfolgter Wartung zurückgesetzt werden können, und
- einen Werkeinstellungs-Parameter, mittels dessen die Werkeinstellungen für sämtliche Parameter geladen werden können, wobei alle aktuellen Parametereinstellungen gelöscht werden.

Das Menü 98 ist ein Optionsmenü, mittels dessen die folgenden Parameter einstellbar sind:
- ein Bewegungsmelder-Parameter, mittels dessen anzeigbar ist, ob die optionale Bewegungsmelder-Baugruppe 76 vorhanden ist,
- ein Bewegungssignal-Parameter, mittels dessen angezeigt werden kann, ob ein Signal von der Bewegungsmelder-Baugruppe 76 erkannt wird,
- einen Ampel-Parameter, mittels dessen angezeigt werden kann, ob die optionale Baugruppe 80 (Ampelsteuerung) vorhanden ist,
- einen Vorwarnzeit-Parameter, mittels dessen die Vorwarnzeit für die Rotschaltung der Ampel-Baugruppe 80 verändert werden kann, und
- einen Dauerrot-Parameter, mittels dessen die Ampel-Baugruppe 80 auf Rot geschaltet werden kann, auch wenn das Tor geschlossen ist (bspw. zu Wartungszwecken).

Das Menü 100 ist ein Uhrenmenü, mittels dessen die folgenden Parameter einstellbar sind:
- ein Zeitparameter, mittels dessen die Zeit eingestellt werden kann,
- ein Datum-Parameter, mittels dessen das aktuelle Datum eingestellt werden kann,
- ein Umschalt-Parameter, mittels dessen die Kalenderwoche für die Umstellung von Winter- nach Sommerzeit bzw. von Sommer- nach Winterzeit eingegeben werden kann,
- ein Tageszeitsperr-Parameter, mittels dessen das Tor für bestimmte Tageszeiten gesperrt werden kann,
- ein Wochentagsperr-Parameter, mittels dessen das Tor für bestimmte Wochentage gesperrt werden kann,
- ein Dauersperr-Parameter, mittels dessen das Tor für eine bestimmte Zeitdauer gesperrt werden kann (z.B. im Urlaubsfall), und
- ein Auswahl-Parameter, mittels dessen auswählbar ist, ob die Sperr-Parameter für den Funkempfänger 66 und den Starttaster 64 oder nur für den Starttaster 64 gelten sollen.

Das Menü 102 ist ein Codemenü, mittels dessen ein Code-Parameter eingegeben werden kann. Bei richtiger Eingabe des Codes, der nur autorisiertem Wartungspersonal zur Verfügung steht, werden sämtliche Parameter des Referenzfahrt-Menüs, des Sensor-Menüs, des Service-Menüs sowie einige andere Parameter freigegeben. Diese Parameter sind andernfalls gesperrt.

Hierdurch kann erreicht werden, daß bspw. die Parameter des Betriebs-Menüs 90 auch von Nichtfachleuten wie bspw. einem Garageneigentümer frei im Rahmen der vorgegebenen Grenzen veränderbar sind. Auf der anderen Seiten können die sicherheitsrelevanten Parameter, die vornehmlich in dem Referenzfahrt-Menü 92, dem Sensor-Menü 94 und dem Service-Menü 96 anwählbar sind, nur von autorisiertem Fachpersonal verändert werden.

Das Display 32 ist normalerweise ausgeschaltet und zeigt allenfalls Status- und/oder Fehlermeldungen an, auf die vorliegend nicht im einzelnen eingegangen wird. Zum Verändern von Parametern ist lediglich das Verstellglied 34 zu verdrehen oder einer der Taster 36, 38, 40 zu betätigen. Durch diesen Vorgang wird das Display eingeschaltet und bspw. die erste Menüzeile des Betriebs-Menüs 90 angezeigt. Der Mikroprozessor 20 ist weiterhin so programmiert, daß sich das Display 32 eine gewisse Zeitspanne nach der letzten Betätigung von einem der Taster 36, 38, 40 oder des Verstellgliedes 34 selbsttätig ausschaltet. Für den über das Codemenü 102 einzugebenden Code gilt, daß die Freigabe der sicherheitsrelevanten Parameter nach der Eingabe des richtigen Codes nur solange freigegeben sind, bis sich das Display 32 automatisch wieder ausschaltet.

Obwohl es in Fig. 1 nicht dargestellt ist, versteht sich, daß die Steuereinheit 11 mit einem Gehäuse versehen ist. Dabei sind in dem Gehäuse Aussparungen für das Display 32, das Verstellglied 34, sowie für die Taster 36, 38, 40 vorgesehen, so daß die Auswahl und Einstellung der Betriebsparameter erfolgen kann, ohne daß das Gehäuse abgenommen werden muß. Weiterhin ist die Schnittstellenplatine 14 so ausgebildet, daß sämtliche Schnittstellenmodule 44 bis 58 Anschlußklemmen aufweisen, auf die ohne Abnahme des Gehäuses zugegriffen werden kann.

Schließlich ist es hierbei möglich, die Steuereinheit 11 so zu gestalten, daß Handsender zur Betätigung des Tors 18 bei der Steuereinheit 11 angemeldet werden können, ohne deren Gehäuse abnehmen zu müssen.

## Patentansprüche

1. Torantrieb (10), insbesondere für Garagentore (18), mit
- einem Motor (60),
- einer Kopplungseinrichtung (17), die Antriebsenergie des Motors (60) in Bewegungen des Tors (18) umsetzt, und
- einer Steuereinheit (11), die den Motor (60) in Abhängigkeit von an die Steuereinheit angeschlossenen Baugruppen (62 - 80) steuert und ein Gehäuse aufweist, wobei die Funktion der Baugruppen (62-80) über Parameter an der Steuereinheit (11) individuell einstellbar ist, und wobei die Steuereinheit (11) zur Einstellung der Parameter der Baugruppen (62 - 80) eine Bedieneinheit (30) mit einem Display (32) und Einstellmitteln (34 - 40), eine Speichereinrichtung (26) zur Speicherung von Parametern sowie eine Prozessoreinrichtung (20) aufweist,
wobei die Prozessoreinrichtung (20) die Speichereinrichtung (26) und die Bedieneinheit (30) derart ansteuert, daß die Parameter wenigstens einiger der Baugruppen (62 - 80) im Rahmen von Menüs (90 - 102) auf dem Display (32) angezeigt werden und mittels der Einstellmittel (34 - 40) einstellbar sind,
**dadurch gekennzeichnet, daß** die Bedieneinheit (30) sowie Klemmen zum Anschluß der Baugruppen (62 - 80) an dem Gehäuse der Steuereinheit (11) von außen zugänglich sind,
daß die Menüs (90 - 102) nach übergeordneten Funktionsgruppen zusammengestellt sind, und
daß bestimmte Parameter und/oder Menüs nur nach Eingabe eines Codes einstellbar bzw. anwählbar sind.

2. Torantrieb nach Anspruch 1, **dadurch gekennzeichnet, daß** die Parameter sämtlicher Baugruppen (62 - 80) im Rahmen von Menüs auf dem Display (32) angezeigt werden und mittels der Einstellmittel (34 - 40) einstellbar sind.

3. Torantrieb nach Anspruch 1 oder Anspruch 2, **dadurch gekennzeichnet, daß** das Display (32) einzeilig ist.

4. Torantrieb nach einem der Ansprüche 1 - 3, **dadurch gekennzeichnet, daß** die Einstellmittel (34 - 40) ein Verstellglied (34) zur Anwahl unterschiedlicher Menüs (90 - 102), Anwahlmittel (36) zur Anwahl einer einen bestimmten Parameter betreffenden Menüzeile sowie Auswahlmittel (38, 40) zur Auswahl einer bestimmten Parametereinstellung aufweisen.

5. Torantrieb nach einem der Ansprüche 1 - 4, **dadurch gekennzeichnet, daß** die Speichereinrichtung (26) ein nichtflüchtiger Speicher (26), vorzugsweise ein EEPROM (26) ist.

6. Torantrieb nach einem der Ansprüche 1 - 5, **dadurch gekennzeichnet, daß** das folgende Menüs anwählbar sind: ein Betriebsmenü (90), mittels dessen Betriebsparameter einstellbar sind, und ein Sensormenü (94), mittels dessen Sensorparameter einstellbar sind.

7. Torantrieb nach Anspruch 6, **dadurch gekennzeichnet, daß** das folgende weitere Menüs anwählbar sind: ein Servicemenü (96), mittels dessen Serviceparameter einstellbar sind, ein Referenzfahrtmenü (92), mittels dessen Parameter für eine Referenzfahrt zur Individualeinrichtung einstellbar sind, und ein Uhrenmenü (100), mittels dessen Parameter einer internen Uhr der Steuereinheit (11) einstellbar sind.

8. Torantrieb nach einem der Ansprüche 1 - 7, **dadurch gekennzeichnet, daß** zur Eingabe des Codes ein separates Menü (102) anwählbar ist.

9. Torantrieb nach einem der Ansprüche 1 - 8, **dadurch gekennzeichnet, daß** die Baugruppen (62 - 80) in obligate Baugruppen (62 - 74) und in optionale Baugruppen (76 - 80) unterteilt sind, daß in der Steuereinheit Schnittstellenmodule (60 - 64) für die optionalen Baugruppen (76 - 80) vorgesehen sind und daß die Parameter der optionalen Baugruppen (76 - 80) erst nach Eingabe eines Codes einstellbar sind.

10. Torantrieb nach einem der Ansprüche 1 - 9, **dadurch gekennzeichnet, daß** die Baugruppen (62 - 80) in obligate Baugruppen (62 - 74) und in optionale Baugruppen (76 - 80) unterteilt sind und daß in der Steuereinheit Steckplätze vorgesehen sind, in die Schnittstellenmodule (60 - 64) für die optionalen Baugruppen (76 - 80) einsteckbar sind.

11. Torantrieb nach einem der Ansprüche 1 - 10, **dadurch gekennzeichnet, daß** auf dem Display (32) Felder für Statusanzeigen und/oder Fehleranzeigen vorgesehen sind.

12. Torantrieb nach einem der Ansprüche 1 - 11, **dadurch gekennzeichnet, daß** das Display (32) durch Betätigung der Einstellmittel (34 - 40) aktivierbar ist.

## Claims

1. Door drive (10), in particular for garage doors (18), having
- a motor (60),
- a coupling device (17) which converts the drive energy of the motor (60) into movements of the door (18), and
- a control unit (11) which controls the motor (60) as a function of assemblies (62-80), which are connected to the control unit, and has a housing, it being possible to individually set the function of the assemblies (62-80) on the control unit (11) by means of parameters, and the control unit (11) for setting the parameters of the assemblies (62-80) having an operator control unit (30) with a display (32) and setting means (34-40), a memory device (26) for storing parameters and a processor device (20),
the processor device (20), the memory device (26) and the operator control unit (30) being actuated in such a way that the parameters of at least some of the assemblies (62-80) are displayed on the display (32) within the framework of menus (90-102) and can be set by means of the setting means (34-40),
**characterized in that** the operator control unit (30) and terminals for connecting the assemblies (62-80) to the housing of the control unit (11) are accessible from the outside,
**in that** the menus (90-102) are arranged in accordance with superordinate function groups, and
**in that** specific parameters and/or menus can be set and/or called up only after a code is entered.

2. Door drive according to claim 1, **characterized in that** the parameters of all assemblies (62-80) are displayed on the display (32) within the framework of menus and can be set by means of the setting means (34-40).

3. Door drive according to claim 1 or claim 2, **characterized in that** the display (32) forms one line.

4. Door drive according to one of claims 1-3, **characterized in that** the setting means (34-40) have an adjustment element (34) for calling up different menus (90-102), calling-up means (36) for calling up a menu line which relates to a specific parameter, and also selection means (38, 40) for selecting a specific parameter setting.

5. Door drive according to one of claims 1-4, **characterized in that** the memory device (26) is a non-volatile memory (26), preferably an EEPROM (26).

6. Door drive according to one of claims 1-5, **characterized in that** the following menus can be called up: an operating menu (90) by means of which operating parameters can be set, and a sensor menu (94) by means of which sensor parameters can be set.

7. Door drive according to claim 6, **characterized in that** the following further menus can be called up: a service menu (96) by means of which service parameters can be set, a reference run menu (92) by means of which parameters for a reference run for the individual device can be set, and a clock menu (100) by means of which parameters of a clock within the control unit (11) can be set.

8. Door drive according to one of claims 1-7, **characterized in that** a separate menu (102) can be called up in order to enter the code.

9. Door drive according to one of claims 1-8, **characterized in that** the assemblies (62-80) are divided into obligatory assemblies (62-74) and optional assemblies (76-80), **in that** interface modules (60-64) for the optional assemblies (76-80) are provided in the control unit, and **in that** the parameters of the optional assemblies (76-80) can be set only after a code is entered.

10. Door drive according to one of claims 1-9, **characterized in that** the assemblies (62-80) are divided into obligatory assemblies (62-74) and optional assemblies (76-80), and **in that** insertion spaces into which interface modules (60-64) for the optional assemblies (76-80) can be inserted are provided in the control unit.

11. Door drive according to one of claims 1-10, **characterized in that** fields for status displays and/or fault displays are provided on the display (32).

12. Door drive according to one of claims 1-11, **characterized in that** the display (32) can be activated by operating the setting means (34-40).

## Revendications

1. Entraînement de porte (10), en particulier pour portes de garage (18), comportant
- un moteur (60),
- un dispositif de couplage (17), qui transforme l'énergie d'entraînement du moteur (60) en mouvements de la porte (18), et
- une unité de commande (11) qui commande le moteur (60) en fonction des modules (62-80) raccordés à l'unité de commande et qui comporte un boîtier, sachant que la fonction des modules (62-80) peut être réglée individuellement sur l'unité de commande (11) par l'intermédiaire de paramètres, et que l'unité de commande (11), en vue du réglage des paramètres des modules (62-80), comporte une unité de traitement (30) avec un afficheur (32) et des moyens de réglage (34-40), une unité de mémoire (26) pour enregistrer les paramètres, ainsi qu'un processeur (20),
le processeur (20), l'unité de mémoire (26) et l'unité de traitement (30) étant activés de telle sorte que les paramètres d'au moins certains des modules (62-80) peuvent être affichés dans le cadre de menus (90-102) sur l'afficheur (32) et peuvent être réglés par les moyens de réglage (34-40),
**caractérisée**
- **en ce que** l'unité de traitement (30), ainsi que des bornes pour le raccordement des modules (62-80) au boîtier de l'unité de commande (11) sont accessibles de l'extérieur,
- **en ce que** les menus (90-102) sont regroupés selon des modules fonctionnels prioritaires, et
- **en ce que** des paramètres et/ou menus déterminés ne peuvent être réglés, et/ou choisis qu'après l'introduction d'un code.

2. Entraînement de porte selon la revendication 1, **caractérisée en ce que** les paramètres de tous les modules (62-80) sont affichés sur l'afficheur (32) dans le cadre de menus et peuvent être réglés par les moyens de réglage (34-40).

3. Entraînement de porte selon la revendication 1 ou 2, **caractérisée en ce que** l'afficheur (32) comporte une seule ligne.

4. Entraînement de porte selon l'une quelconque des revendications 1 à 3, **caractérisée en ce que** les moyens de réglage (34-40) comportent un organe de réglage (34) pour appeler différents menus (90-102), des moyens d'appel (36) pour appeler une ligne de menu concernant un paramètre déterminé, ainsi que des moyens de sélection (38, 40) pour sélectionner un réglage d'un paramètre déterminé.

5. Entraînement de porte selon l'une quelconque des revendications 1 à 4, **caractérisée en ce que** l'unité de mémoire (26) est une mémoire non volatile (26), de préférence une mémoire EEPROM (26).

6. Entraînement de porte selon l'une quelconque des revendications 1 à 5, **caractérisée en ce que** les menus ci-après peuvent être appelés : un menu Service (90), dans lequel peuvent être réglés des paramètres de service, et un menu Capteurs (94), dans lequel peuvent être réglés des paramètres de capteurs.

7. Entraînement de porte selon la revendication 6, **caractérisée en ce que** d'autres menus peuvent être appelés : un menu Maintenance (96), dans lequel peuvent être réglés des paramètres de maintenance, un menu Déplacement de référence (92), dans lequel peuvent être réglés des paramètres pour un déplacement de référence par rapport à un dispositif individuel, et un menu Horloge (100), dans lequel peuvent être réglés des paramètres d'une horloge interne de l'unité de commande (11).

8. Entraînement de porte selon l'une quelconque des revendications 1 à 7, **caractérisée en ce qu'**un menu séparé (102) peut être appelé pour l'introduction du code.

9. Entraînement de porte selon l'une quelconque des revendications 1 à 8, **caractérisée en ce que** les modules (62-80) sont divisés en modules obligatoires (62-74) et modules optionnels (76-80), **en ce que** des modules d'interface (60-64) pour des modules optionnels (76-80) sont prévus dans l'unité de commande, et **en ce que** les paramètres des modules optionnels (76-80) peuvent être réglés uniquement après l'introduction d'un code.

10. Entraînement de porte selon l'une quelconque des revendications 1 à 9, **caractérisée en ce que** les modules (62-80) sont divisés en modules obligatoires (62-74) et modules optionnels (76-80) et **en ce que** des points de connexion sont prévus dans l'unité de commande, dans lesquels peuvent être enfichés les modules d'interface (60-64) pour les modules optionnels (76-80).

11. Entraînement de porte selon l'une quelconque des revendications 1 à 10, **caractérisée en ce que** des champs pour l'affichage d'état et/ou l'affichage d'erreurs sont prévus sur l'afficheur (32).

12. Entraînement de porte selon l'une quelconque des revendications 1 à 11, **caractérisée en ce que** l'afficheur (32) peut être activé par la manipulation des moyens de réglage (34-40).
